# EUROPEAN PATENT SPECIFICATION

(11) **EP 2 656 981 B1**
(45) Date of publication and mention of the grant of the patent: **22.06.2016**
(21) Application number: 11850204.6
(22) Date of filing: 21.10.2011
(51) Int. Cl.: B26B 17/02, B23D 29/02, B25B 7/12, B25B 25/00, H02G 1/00

(54) **HAND-OPERATED TOOL**
HANDBETRIEBENES WERKZEUG
OUTIL À MAIN

(30) Priority: 24.12.2010 JP 2010286999
(43) Date of publication of application: 30.10.2013
(73) Proprietor: Minoru Kogyo Co., Ltd., Osaka 540-0005 (JP)
(72) Inventor: TAKAHASHI, Isao, Osaka-city Osaka 540-0005 (JP)
(74) Representative: TBK
(86) International application number: PCT/JP2011/074284
(87) International publication number: WO 2012/086306

(56) References cited:
- DE-A1- 19 525 230
- DE-A1- 19 549 341
- DE-A1- 19 949 511
- FR-A- 1 423 489
- FR-A1- 2 411 056
- JP-A- 3 191 981
- JP-A- 50 115 381
- JP-B- 46 012 360
- US-A- 1 168 125
- US-A- 2 926 556

## Description

### Technical Field

The present invention relates to a hand-operated tool that is operated when held mainly by one hand, and in particular, to a hand-operated tool represented by a cutter tool for cutting a helical steel wire installed to support a communication cable, a cutter tool for cutting a coated cable for power supply, and a tool for attaching a terminal to an end of a wire by applying pressure, for example.

### Background Art

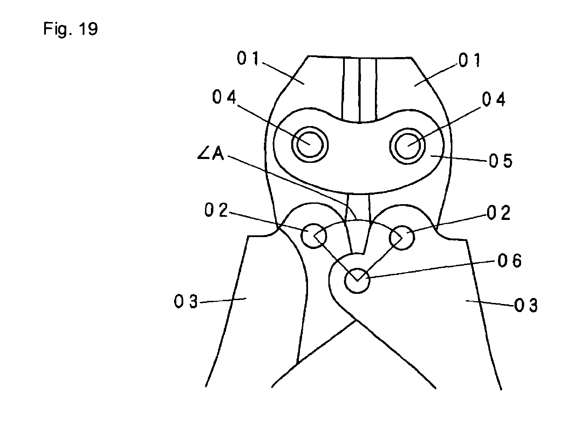

As in Fig 19 showing the basic structure of a conventional hand-operated tool, a pair of cutting blades 01, 01, left and right, that face each other are connected through connecting pins 04, 04 via a connection plate 05, and the lower end portions of the cutting blades are connected to the upper end portions of a pair of operating handles, left and right, connected through the center axis 06 via the pivots 02, 02 so that the opening and closing operations are possible in the structure.

Thus, the distance between the pivots 02, 02 and the center axis 06 is always constant, and therefore, only a small force is generated without the toggle mechanism working sufficiently when the operating handles 03, 03 are opened, that is to say, when the angle ∠A formed between one pivot 02, the center axis 06 and the other pivot 02 is small at the beginning of the cutting operation. Conversely, when the operating handles 03, 03 are closed so that the angle ∠A becomes greater, the toggle force gradually increases so that a greater cutting force (or pressure) can be generated.

The hand-operated tool having this structure is publicly-known because it is disclosed in the below-described Patent Document 2, and it cannot be said to be optimal as a tool that requires a large cutting force from the beginning of cutting, as in the cutting of an electrical cable, though the cutting force is maximum at the final point of the cutting operation, because the force applied to the cutting blades 01, 01 gradually increases almost linearly during the transition from the state where the handles are open to the state where they are closed.

As a means for achieving a great cutting force from the beginning of cutting, such a structure as in the below-described Patent Document 1 is publicly-known, where the toggle mechanism is devised so as to provide an effective structure, and furthermore, the handles are made long so that the pressure for cutting by the blades can be increased due to the pressing force through the use of long handles.

Though the long handles for increasing the cutting pressure can increase the pressure applied to the blades, however, they make the tool heavier, and thus make it inconvenient to carry around, and reduce the operability of the tool, especially when the tool is operated by one hand, and therefore cause a great problem when the tool is used for the work of climbing up a telephone pole.

It is also referred to Patent Documents 3 and 4, each of which discloses a hand-operated tool having the features defined in the preamble of Claims 1 and 5 of the present invention.

### Prior Art Documents

### Patent Documents

Patent Document 1: JP 2007-143680 A
Patent Document 2: JP 3145602 U
Patent Document 3: FR 2 411 056 A1
Patent Document 4: DE 195 49 341 A1

### Summary of the Invention

### Problem to Be Solved by the Invention

Hand-operated tools of the above-mentioned type can be roughly categorized into: cutter tools for cutting steel wires, where the pressure applied to one blade from the other is required to be almost the same from the start to the end of the cutting operation; cutting tools for cutting a coated cable for power supply, where a large force is required from the initial stage of cutting to the middle stage, and a force may be small at the final stage of the cutting; and tools for attaching a terminal to an end of a wire by applying pressure, where a large force is not required at the initial stage of cutting and a maximum force is required at the final stage of applying pressure.

An object of the present invention is to provide a hand-operated tool having a completely novel structure that allows for the production of a tool that is optimal for the above-described intended uses by providing a completely novel structure with which the handles are operated for the blade moving operation and by changing the action between the handles through the setting of the locations where pivot pins penetrate and the setting of the connection fittings.

### Means for Solving Problem

In order to achieve the object, the present invention provides a hand-operated tool according to Claim 1 of the present invention and a hand-operated tool according to Claim 5 of the present invention.

Further developments of the hand-operated tool according to Claim 1 of the present invention are set forth in Claims 2 to 4 of the present invention.

### Effects of the Invention

In the hand-operated tool according to Claim 1 of the present invention, upper portions of the operating handles are disposed so as to abut in the same plane, and the opposing surfaces thereof form cam contact surfaces in a certain arc form that directly make contact with each other; between the pivots and pivot pins provided in the other operating handles, respectively, two connection fittings that connect the left and right handles on the front and back surfaces separately are disposed diagonally in a crisscross shape as viewed from the front, thereby connecting the respective upper and lower ends to the above-described pivots and the above-described pivot pins; and the crisscross position of the above-described connection fittings is determined by setting the locations of the pivot pins so that the above-described cam contact surfaces are set to maintain approximately constant locations without following the change in the angle between the handles, and thus, such an effect can be provided that an optimal tool with which maximum pressure can be applied to an object to be cut or pressed from the initial cutting stage of the tool to the terminal stage through the middle stage can be gained.

In the hand-operated tool according to Claim 2, the cam surfaces are disposed so as to abut in the same plane, and the opposing surfaces thereof form cam contact surfaces in a certain arc form that directly make contact with each other; the above-described two connection fittings are disposed diagonally in a crisscross shape, thereby connecting the respective upper and lower ends to the pivots and the pivot pins; and the crisscross position is determined by setting the locations of the pivot pins so that the cam contact surfaces are set to maintain approximately constant locations without following the change in the angle between the handles, and therefore, the pressure for cutting applied to the blades can be maintained at approximately constant from the initial cutting stage to the terminal stage through the middle stage, and thus, such an effect can be provided that a tool that is optimal as a cutter tool for cutting a steel wire, where a large force is required almost uniformly from the initial stage to the end of the cutting operation, can be gained.

In the hand-operated tool according to Claim 3, the cam surfaces are disposed so as to abut in the same plane, and the opposing surfaces thereof form cam contact surfaces in a certain arc form that directly make contact with each other; the above-described two connection fittings are disposed diagonally in a crisscross shape, thereby connecting the respective upper and lower ends to the pivots and the pivot pins; and the crisscross position of the connection fittings is determined by setting the locations of the pivot pins so that the cam contact surfaces are set to gradually move from a high position a to a low position b following the change in the angle between the handles, and therefore, such an effect can be provided that a tool that is optimal as a cutter tool for cutting a coated cable for power supply, where a large force is required from the initial cutting stage to the middle stage in order to apply a pressure for cutting to the blades, and the force may be smaller in the terminal cutting stage, can be gained.

In the hand-operated tool according to Claim 4, the cam surfaces are disposed so as to abut in the same plane, and the opposing surfaces thereof form cam contact surfaces in a certain arc form that directly make contact with each other; the above-described two connection fittings are disposed diagonally in a crisscross shape, thereby connecting the respective upper and lower ends to the pivots and the pivot pins; and the crisscross position of the above-described connection fittings is determined by setting the locations of the pivot pins so that the cam contact surfaces are set to gradually move from a low position b to a high position a following the change in the angle between the handles, and therefore, such an effect can be provided that a tool that is optimal as a tool for connecting an end of an electrical wire to a terminal through pressure, where no large force is required at the initial stage in order to apply pressure to a body to be pressed, and a maximum force is required at the final stage, can be gained.

In the hand-operated tool according to Claim 5, axes for connecting two connection fittings, which connect the left and right handles on the front and back surfaces and are disposed diagonally in a crisscross shape as viewed from the front, are respectively provided in the operating handles separately from the pivots, and between the thus-separately provided axes and pivot pins separately provided in the other operating handles, the two connection fittings are disposed in a crisscross shape so that the two end portions are connected to each other, and therefore, any positional relationship between these axes and pivot pins can be selected, and thus, it is easy to set an optimal length of the connection fittings and an optimal crisscross shape, and therefore, such an effect can be provided that an optimal cutting tool, where the point at which the maximum cutting pressure is applied can be easily determined while the blades are moving during cutting, can be easily gained.

### Brief Description of the Drawings

Fig 1 is a front diagram showing a tool for cutting a steel wire according to the first embodiment;
Fig 2 is a front diagram showing the same tool in a state where the blades are open;
Fig 3 is a front diagram showing the main portion of the same tool;
Fig 4 is a front diagram for illustrating the main portion of the same tool;
Fig 5 is a diagram for illustrating the mechanism of the same cutter;
Fig 6 is a diagram for illustrating the movement of the same cutter;
Fig 7 is a front diagram showing the tool for cutting a cable according to the second embodiment;
Fig 8 is a front diagram showing the main portion of the same cutter;
Fig 9 is a diagram for illustrating the mechanism of the same cutter;
Fig 10 is a diagram for illustrating the movement of the same cutter;
Fig 11 is a front diagram showing the tool for connecting a terminal through pressure according to the third embodiment;
Fig 12 is a front diagram showing handle portions of the same tool;
Fig 13 is a diagram for illustrating the mechanism of the same cutter;
Fig 14 is a diagram for illustrating the movement of the same cutter;
Fig 15 is a front diagram showing the tool for cutting a material having a specific shape according to the fourth embodiment;
Fig 16 is a front diagram showing the same tool in a state where the blades are open;
Fig 17 is a front diagram showing the main portion of the same tool;
Fig 18 is a front diagram for illustrating the main portion of the same tool; and
Fig 19 is a front diagram showing the main portion of a cutter having a conventional structure.

### Preferred Embodiments of the Invention

In the following, an embodiment of the hand-operated tool according to the present invention as a cutter for a steel wire that is appropriate for cutting a steel wire provided in spiral form in order to support a communication cable is the first embodiment, an embodiment as a tool that is appropriate for a cutter for a coated cable for power supply is the second embodiment, and an embodiment as a tool appropriate for connecting a terminal to an end of an electrical wire through pressure is the third embodiment, and they are described in reference to the drawings.

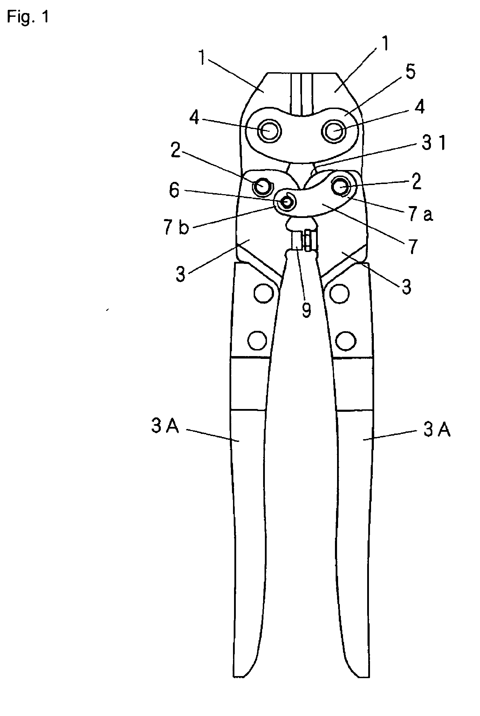

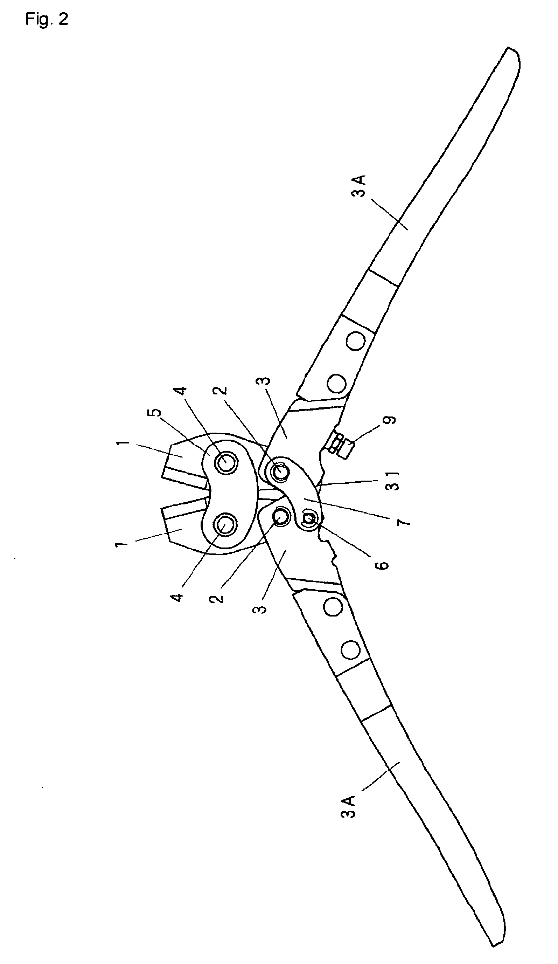

Figs 1 to 6 show a steel wire cutter according to the first embodiment of the present invention. In the basic structure of the steel wire cutter as shown in Figs 1 to 4, a pair of cutting blades 1, 1, left and right, with blade edges in linear form are disposed so as to face each other, the upper end portions of a pair of operating handles 3, 3, left and right, are respectively connected to the lower end portion of these blades 1, 1 through the pivots 2, 2, the above-described blades 1,1 are connected to each other through a connection plate 5 using connecting pins 4, 4, and grips 3A, 3A for operating the handles are respectively connected to the lower end of the operating handles 3, 3 as shown in Figs 1 and 2.

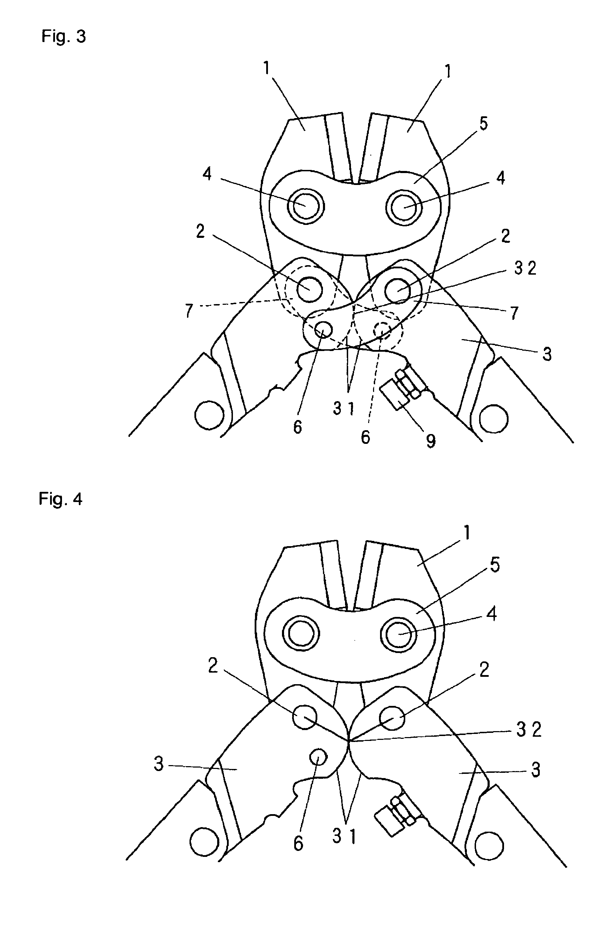

The upper portions of the operating handles 3, 3, left and right, are disposed so as to abut in the same plane, and as shown in Figs 3 to 5, the opposing surfaces 31, 31 in a certain arc form are made to make direct contact with each other, and thus, cam contact surfaces 32, 32 are provided. In addition, holes for engaging pivot pins 6, 6 are created in the operating handles 3, 3, respectively, and two connection fittings 7, 7 for connecting the left and right handles 3, 3 through the pivots 2, 2 and the holes for engaging the pivot pins 6, 6 are provided diagonally on the front side and on the rear side, respectively, so as to be in crisscross form as viewed from the front. The upper end portions 7a and the lower end portions 7b of the connection fittings 7, 7 are connected to the pivots 2, 2 and the pivot pins 6, 6 secured to the above-described holes for engaging the pivot pins 6, 6, respectively.

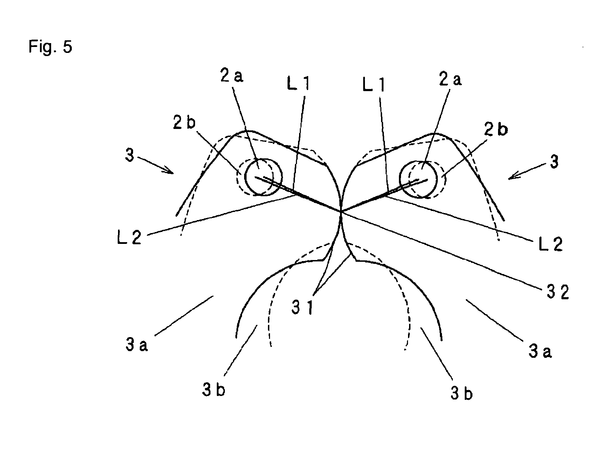

In the cutter for a steel wire according to this embodiment, as shown in Fig 5, the cam contact surfaces in arc form are set to have the form of the curved surface shown in Figs 3 to 5, and the locations of the pivot pins 6, 6 are specified as in Figs 1 to 3 in terms of the relationship with the pivots 2, 2 so that the positions of the connection fittings 7, 7 that are diagonal and are in crisscross form are specified as in Fig 3. Even when the angle between the handles 3, 3 changes as the handles 3, 3 move from the positions at which cutting starts (positions of solid lines) 3a to the working positions (broken lines) 3b, and the positions of the pivots 2, 2 change to the positions from 2a to 2b so that the lines for connecting the centers of the pivots 2, 2 and the cam contact surfaces 32, 32 change from L1 to L2, the cam contact surfaces 32, 32 maintain approximately the constant locations without changing greatly in the upward and downward directions by directly following the change of the angle between the handles 3, 3.

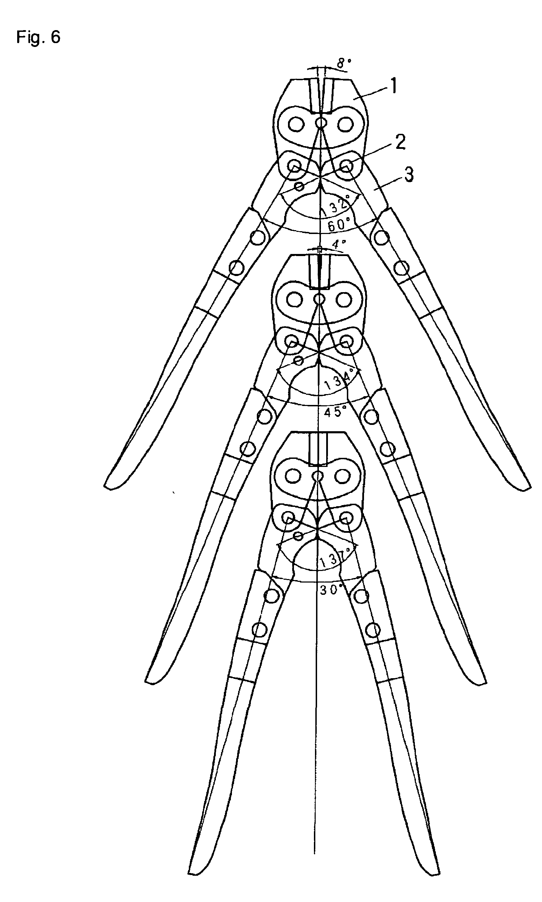

Fig 6 shows the relationships between the positions of the blades 1, 1 and the handles 3, 3 in a transition of a state where the blades start opening, a state in the middle, and a state where the blades are closed. In the three states shown in this figure, the angles at which the blades 1, 1 are opened are 8°, 4° and 0°, and the angles at which the handles 3, 3 are opened are 60° at the beginning and 30° in the state where the blades are closed. For these handles, the pressure applied to the blades for pinching was measured. The results of measurement are shown in Table 1 below for the handles A. Table 1 also shows the results of measurement for handles B in the below-described tool according to the second embodiment and for handles C in the below-described tool according to the third embodiment.

In this setting, the pressure for cutting applied to the blades 1, 1 when the handles 3, 3 are closed can be maintained approximately constant from the stage at which the cutting starts to the stage at which the cutting ends, and thus, the tool is adjusted so as to be appropriate for the tool where the same pressure is always necessary. Accordingly, the tool according to this embodiment is appropriate for the cutter for a steel wire where an approximately uniform large cutting force is required from the start of the cutting to directly before the completion of cutting.

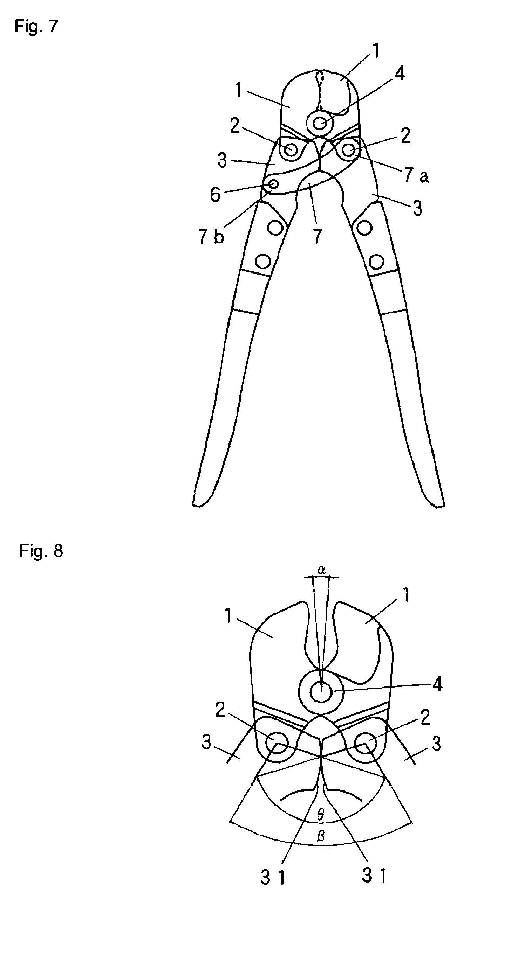

Figs 7 to 10 show a tool that is appropriate for use as a cutter for a coated cable for power supply according to another embodiment where the blade edges of the pair of cutting blades 1, 1, left and right, are in concave form. This is described below as the second embodiment.

In the tool for cutting a cable according to this embodiment, the middle portions in the upward and downward directions of the pair of blades 1, 1, left and right, are directly connected through one connecting pin 4, unlike the blades 1, 1 in the first embodiment. In addition, as shown in Fig 7, the two connection fittings 7, 7 for bridging and connecting the handles 3, 3, left and right, which are diagonal on the front side and on the rear side so as to be in crisscross form as viewed from the front, are long as compared to the connection fittings 7 in the first embodiment. The holes for the pivot pins 6, 6 are created close to an end of the handles 3 in the direction of the width, and in this structure, the upper end portions 7a and the lower end portions 7b of the connection fittings 7 are connected to the pivots 2, 2 and the pivot pins 6, 6, respectively.

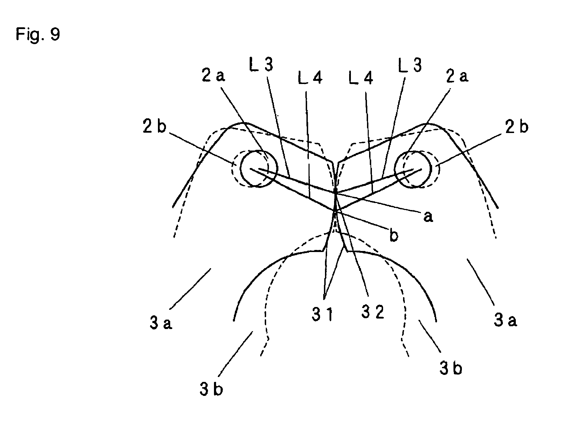

In the tool according to this embodiment, as clearly shown in Figs 8 and 9, the opposing surfaces 31, 31 of the operating handles 3, 3, left and right, disposed so as to abut in the same plane are in arc form with the curvature slightly greater than that in the opposing surfaces 31, 31 of the handles 3, 3 in the first embodiment. Two connection fittings 7, 7 for connecting pivots 2, 2 and the pivot pins 6, 6 provided in the operating handles 3, 3, respectively, are disposed diagonally on the front side and on the rear side so as to be in crisscross form so that the cam contact surfaces 32, 32 are set to move gradually from an initial high position a to a low position b as the angle between the handles 3, 3 changes together with the positions of the handles 3, 3, which change from the position at which cutting starts (solid lines) 3a to the working position (broken lines) 3b, as shown in Fig 9, where the positions of the pivots 2, 2 change from 2a to 2b, and the lines for connecting the center points of the pivots 2, 2 and the cam contact surfaces 32, 32 move from L3 to L4.

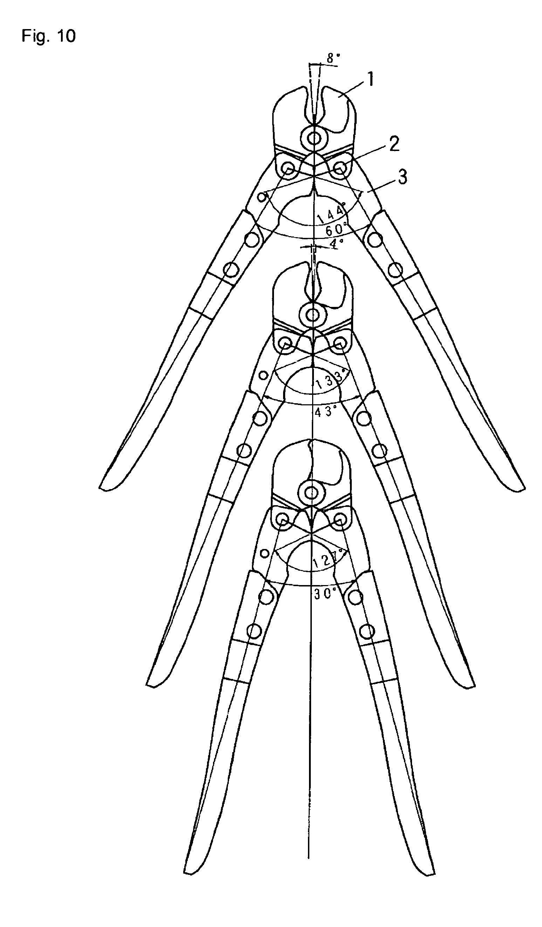

Fig 10 shows the relationships between the positions of the blades 1, 1 and the handles 3, 3 in a transition of a state where the blades start opening, a state in the middle, and a state where the blades are closed. The results of measurement in terms of the relationship between the blades and handles in this tool are shown in Table 1 below for the handles B.

By setting the relationship in this manner, the cam contact surfaces 32, 32 gradually move from a high position a to a low position b, and the lines for connecting the center of the pivots and the cam contact surfaces 32, 32 move downward from L3 to L4, and thus, though the pressure for cutting applied to the blades 1, 1 becomes weaker in the latter half of the cutting operation, the pressure for cutting can be concentrated to the blades 1, 1 from the initial stage of cutting to at least the middle stage of cutting.

Accordingly, the thus-formed tool can be used as a tool that is optimal for a cutter for a coated cable for power supply where a large force is required from the initial stage of cutting to the middle stage, and the pressure for cutting may be smaller at the final stage of cutting.

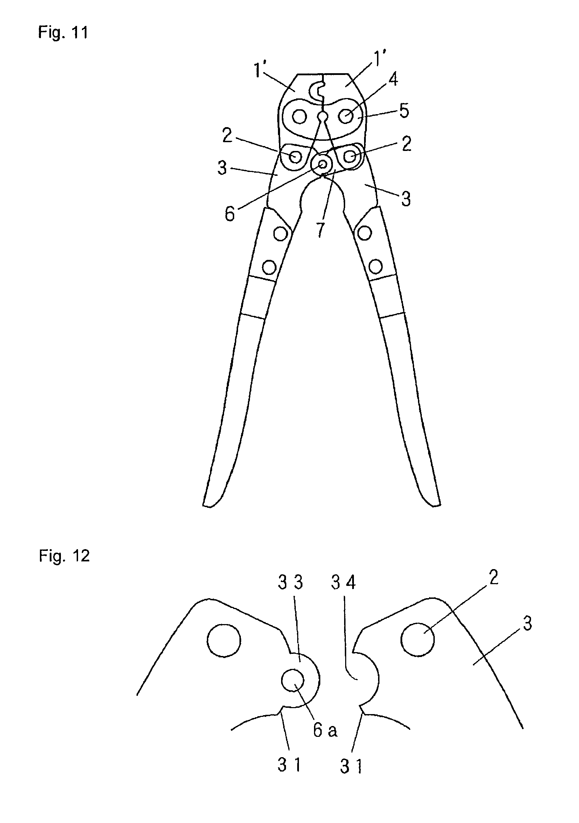

Figs 11 to 14 show a tool that is appropriate for use as a hand-operated tool for connecting an electrical wire terminal through pressure with a pair of pressers 1', 1', left and right, having a recess and a small protrusion in each blade. This embodiment having the pressers instead of the cutting blades in the above embodiments is described below as the third embodiment.

In the hand-operated tool according to this embodiment, as shown in Fig 11, the connection fittings 7, 7 for bridging and connecting the left and right handles 3, 3 are shorter than the connection fittings 7 in the first embodiment, and the position of the hole 6a through which a pivot pin 6 is provided is in a small protrusion 33 that extends from a part of the left handle 3 as shown in Fig 12.

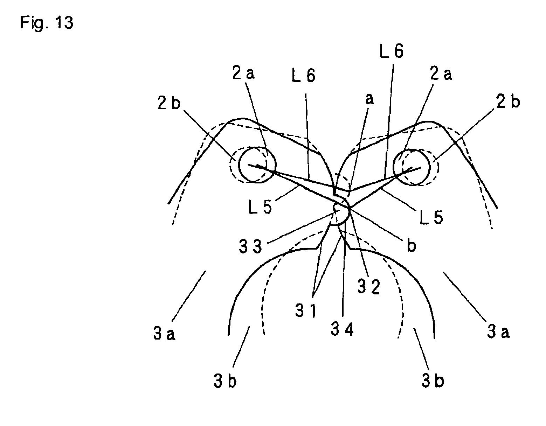

In the tool in this embodiment, as shown in Figs 12 and 13, one operating handle 3, the left handle 3 in Fig 12, has a small protrusion 33 in a portion of the opposing surface 31, and the other handle 3, the right handle 3 in Fig 12, has a small recess 34 in the opposing surface 31 for receiving the small protrusion 33 so that the small protrusion 33 and the small recess 34 engage with each other all the time, unlike the opposing surfaces 31, 31 of the operating handles 3, 3, left and right, that are disposed so as to abut in the same plane in the first embodiment.

In the same manner as in the above-described embodiments, two connection fittings, not shown, for connecting pivots 2, 2 and the pivot pins 6, 6 provided in the operating handles 3, 3, respectively, are disposed diagonally on the front side and on the rear side so as to be in crisscross form so that the contact portions between the small protrusion 33 and the small recess 34 are set to move gradually from an initial low position b to a high position a as the angle between the handles 3, 3 changes together with the positions of the handles 3, 3, which change from the position at which connecting starts (solid lines) 3a to the working position (broken lines) 3b, as shown in Fig 13, where the positions of the pivots 2, 2 change from 2a to 2b, and the lines for connecting the center points of the pivots 2, 2 and the contact portions between the small protrusion 33 and the small recess 34 on the cam contact surfaces 32, 32 move from L5 to L6.

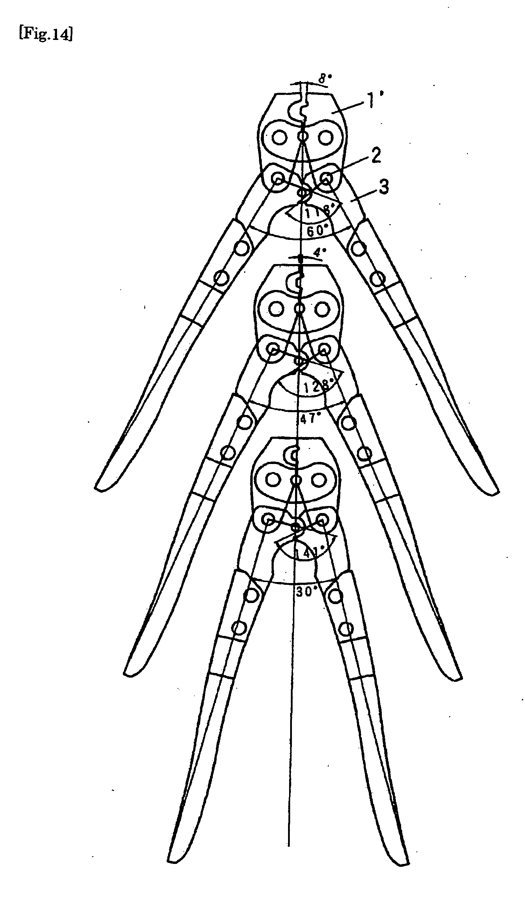

Fig 14 shows the relationships between the positions of the pressers 1', 1' and the handles 3, 3 in this tool in a transition of a state where the pressers start opening, a state in the middle, and a state where the pressers are closed. The results of measurement in terms of the relationship between the pressers and handles in this tool are shown in Table 1 below for the handles C.

By setting the relationship in this manner, the cam contact surfaces 32, 32 gradually move from a low position b to a high position a, and the lines for connecting the center of the pivots and the cam contact surfaces 32, 32 move upward from L5 to L6 as viewed from the top, and thus, though it is difficult for a strong force to be applied to the pressers 1', 1' from the beginning through the first half of the operation, the pressure applied to the pressers 1, 1 can be maximum at the final stage.

The thus-set tool is optimal as a hand-operated tool for connecting a terminal to an electric wire through pressure where a large force is not required from the initial stage of applying pressure to the middle stage and a large force for applying pressure is required at the final stage.

Next, Table 1 shows the results of measurements of the relationships between the blades and the handles in the tools according to the above-described embodiments. It can be seen from the results of measurements in Table 1 that the greater the toggle angle θ is, the easier it is to generate a force applied to the blades, and the greater the amount of change in the handle angle β is, the easier it is to generate a force applied to the blades. In addition, the following can be read from the results of measurements in Table 1.

Force applied to the blades from handles A is approximately constant, which is effective when it is desired to get approximately the same force all the time.

Force applied to the blades from handles B gradually becomes smaller, which is effective when it is desired to get a large force at the beginning.

Force applied to the blades from handles C gradually becomes larger, which is effective when it is desired to get a large force at the end.

**[Table 1]**

| α (Angle at which blades open) | | 8° | 4° | 0° |
|---|---|---|---|---|
| Handles A | θ (Toggle angle) | 132° | 134° | 137° |
| | | Approximately constant | | |
| | β (Handle angle) | 60° | 45° | 30° |
| | | Difference: 15° → Difference: 15° | | |
| Handles B | θ | 144° | 133° | 127° |
| | | Large → small | | |
| | β | 60° | 43° | 30° |
| | | Difference: 17° → Difference: 13° | | |
| Handles C | θ | 118° | 128° | 141° |
| | | Small → large | | |
| | β | 60° | 47° | 30° |
| | | Difference: 13° → Difference: 17° | | |

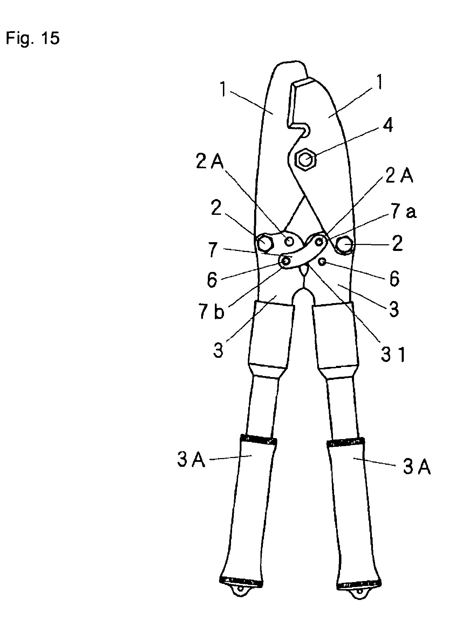

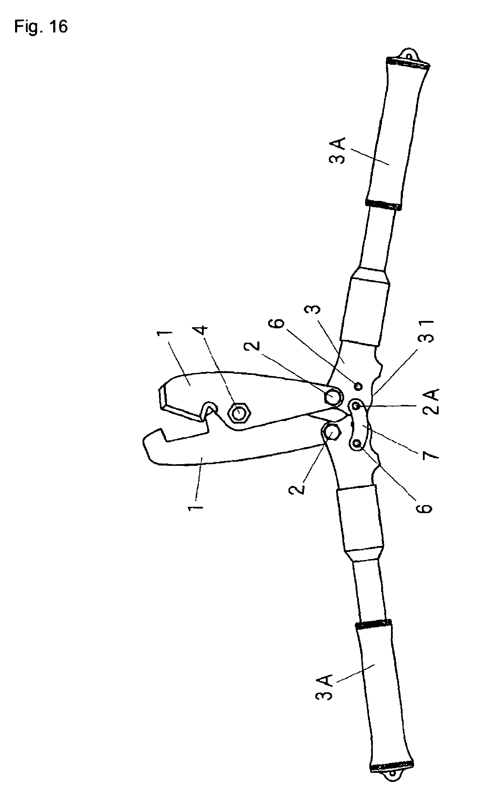

Figs 15 to 18 show a cutting tool having blades in such a form as to be appropriate to cut a long metal material for indoor use to an appropriate length as the fourth embodiment, where the long metal material is a housing material in C shape as viewed from the side formed by bending a thin metal plate in band form in the longitudinal direction and is to be used as a material for attaching a ceiling board when provided in the ceiling cavity. Needless to say, the cutting tool in this embodiment can be used as a tool for cutting a steel wire or an electrical cable as shown in the above embodiments if the shape of the blades is adjusted. The structure is described below.

In the tool according to the fourth embodiment, the left blade 1 from among a pair of blades 1, 1 is a concave blade in C shape 1a, and the right blade 1 is a convex blade in C shape 1b. This pair of blades 1, 1 has one connecting pin 4 for directly connecting the center portions in the upward and downward directions of the blades 1, 1. Regarding this point, the structure is the same as that of the tool according to the second embodiment.

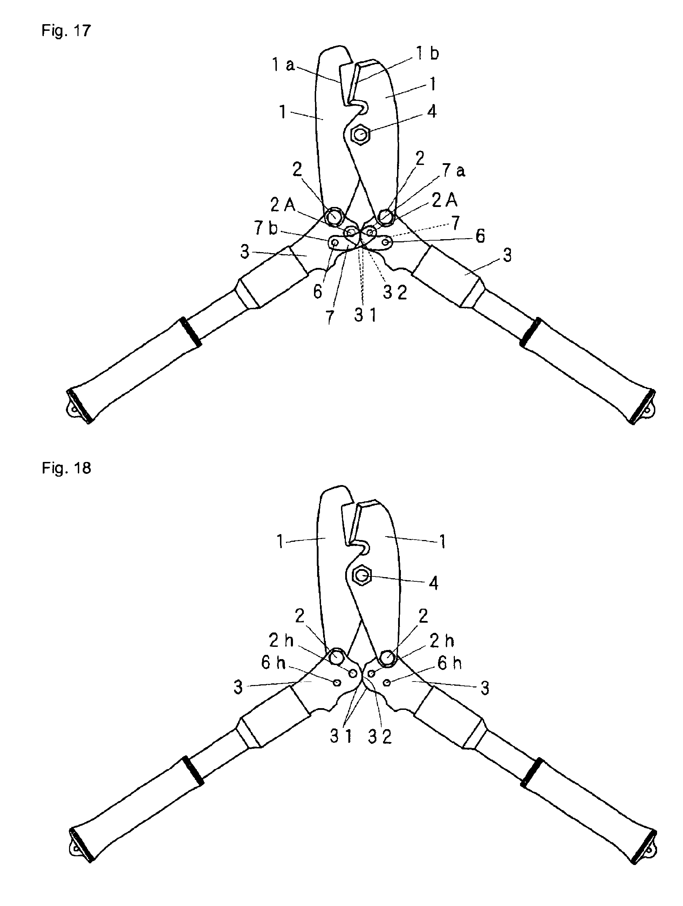

The lower end portions of these blades 1, 1 are connected to the upper portions of a pair of operating handles 3, 3 through the pivots 2, 2, respectively. In addition, as shown in Figs 17 and 18, the operating handles 3, 3 are provided so as to face each other and abut in the same plane where the opposing surfaces 31, 31 are both in a certain arc form in the same manner as in the tools in the above-described embodiments.

In addition, as shown in Fig 18, each of the above-described operating handles 3,3 in the tool according to this embodiment has a hole 2h for an axis 2A and a hole 6h for a pivot pin 6. Two connection fittings 7, 7 for connecting the left and right handles 3, 3 on the front and rear sides separately are diagonally provided between the hole 2h for the axis created in one operating handle 3 and the hole 6h for the pivot pin created in the other operating handle 3 so that the two connection fittings 7, 7 are in a crisscross form as viewed from the front, and the upper and lower end portions 7a, 7b of the respective connection fittings 7 are connected to the axes 2A, 2A and the pivot pins 6, 6 in the structure.

Thus, the locations of these axes 2A, 2A and pivot pins 6, 6 can be set so that the crisscross form of the two connection fittings 7, 7 provided on the front and rear of the operating handles 3, 3 can be specified, and the cam contact surfaces 32, through which the above-described opposing surfaces 31, 31 of the pair of operating handles 3, 3 make contact with each other, and the amount of displacement thereof can be set in the structure.

The tool for cutting a material in C shape in the fourth embodiment can be used as a tool for cutting an electrical wire in the case where the pair of cutting blades 1, 1 is changed to a pair of blades for cutting an electrical wire, in other words, the pair of cutting blades 1, 1 in this embodiment is exchanged with the pair of blades 1, 1 for cutting an electrical wire in the second embodiment. In addition, the setting of the locations of the axes 2A, 2A and the pivot pins 6, 6 can be changed so that the cutting blades can be changed to pressers for connecting a terminal as in the third embodiment.

Though typical embodiments of the present invention are described above, the present invention is not limited only to these embodiments, and appropriate modifications can be implemented as long as the above-described objects of the invention are achieved, the above-described effects are gained, and the structure does not deviate from scope of the claims.

### Industrial Applicability

The hand-operated tool according to the present invention is optimal as a tool for cutting a hard wire material or a coated electrical cable, a tool for attaching a terminal to an end of a wire through pressure, and a tool for cutting other materials, and therefore, the tool appears to be very useful when sold in a market.

### Explanation of Symbols

- 1: cutting blade
- 1': presser
- 2: pivot
- 2A: axes
- 3: handle
- 4: connecting pin
- 5: connection plate
- 6: pivot pin
- 7: connection fitting
- 7a: upper end portion
- 7b: lower end portion
- 31: opposing surface
- 32: cam contact surface

## Claims

1. A hand-operated tool, comprising: a pair of cutting blades (1, 1) or pressers (1', 1'), left and right; a pair of operating handles (3, 3), left and right, connected to said blades (1, 1) or pressers (1', 1') via pivots (2, 2); and one connecting pin (4) that directly connects said blades (1, 1) or pressers (1', 1') to each other or a connection plate (5) that connects said blades (1, 1) or pressers (1', 1') to each other using connecting pins (4, 4), and being configured so that:
upper portions of the operating handles (3, 3) are disposed so as to abut in the same plane, and the opposing surfaces (31, 31) thereof form cam contact surfaces (32, 32) in a certain arc form that directly make contact with each other,
**characterized in that**
between said pivots (2, 2) and pivot pins (6, 6) provided in the other operating handles (3, 3), respectively, two connection fittings (7, 7) that connect the left and right handles (3, 3) on the front and back surfaces separately are disposed diagonally in a crisscross shape as viewed from the front, thereby connecting the respective upper and lower ends (7a, 7b) of the connection fittings (7, 7) to said pivots (2, 2) and said pivot pins (6, 6).

2. The hand-operated tool according to Claim 1 comprising the pair of cutting blades (1, 1) for cutting a steel wire, and being configured so that:
said cam contact surfaces (32, 32) are set to maintain approximately constant locations without changing greatly in the upward and downward directions with respect to the upper portions of the operating handles (3, 3) by directly following the change in the angle between the handles (3, 3).

3. The hand-operated tool according to Claim 1 comprising the pair of cutting blades (1, 1) for cutting a cable for power supply, and being configured so that:
said cam contact surfaces (32, 32) are set to gradually move in the downward direction with respect to the upper portions of the operating handles (3, 3) following the change in the angle between the handles (3, 3) from the position at which cutting starts (3a) to the working position (3b).

4. The hand-operated tool according to Claim 1 comprising the pair of pressers (1', 1') for connecting a terminal to a wire by applying pressure, and being configured so that:
said cam contact surfaces (32, 32) are set to gradually move in the upward direction with respect to the upper portions of the operating handles (3, 3) following the change in the angle between the handles (3, 3) from the position at which connecting starts (3a) to the working position (3b).

5. A hand-operated tool, comprising: a pair of cutting blades (1, 1) or pressers, left and right; a pair of operating handles (3, 3), left and right, connected to said blades (1, 1) or pressers via pivots (2, 2); and one connecting pin (4) that directly connects said blades (1, 1) or pressers to each other or a connection plate (5) that connects said blades (1, 1) or pressers to each other using connecting pins (4, 4), and being configured so that:
upper portions of the operating handles (3, 3) are disposed so as to abut in the same plane, and the opposing surfaces (31, 31) thereof form cam contact surfaces (32, 32) in a certain arc form that directly make contact with each other,
**characterized in that**
between axes (2A, 2A) respectively provided in the operating handles (3, 3) separately from said pivots (2, 2) and pivot pins (6, 6) provided in the other operating handles (3, 3) separated from the axes (2A, 2A), two connection fittings (7, 7) that connect the left and right handles (3, 3) on the front and back surfaces separately are disposed diagonally in a crisscross shape as viewed from the front, thereby connecting the respective upper and lower ends (7a, 7b) of the connection fittings (7, 7) to said axes (2A, 2A) and said pivot pins (6, 6).

## Patentansprüche

1. Handbetätigtes Werkzeug, das Folgendes umfasst: ein Paar Schneiden (1, 1) oder Presser (1', 1'), links und rechts; ein Paar Betätigungsgriffe (3, 3), links und rechts, die mit den Klingen (1, 1) oder Pressern (1', 1') über Drehpunkte (2, 2) verbunden sind; und ein Verbindungsstift (4), der die Klingen (1, 1) oder Presser (1', 1') direkt miteinander verbindet, oder eine Verbindungsplatte (5), die die Klingen (1, 1) oder Presser (1', 1') unter Verwendung von Verbindungsstiften (4, 4) miteinander verbindet, und das so gestaltet ist, dass:
obere Abschnitte der Betätigungsgriffe (3, 3) so angeordnet sind, dass sie in der gleichen Ebene gegeneinander stoßen und ihre gegenüber liegenden Oberflächen (31, 31) in einer bestimmten Bogenform Nockenkontaktoberflächen (32, 32) ausbilden, die miteinander direkten Kontakt eingehen,
**dadurch gekennzeichnet, dass**
zwischen den Drehpunkten (2, 2) und Drehstiften (6, 6), die jeweils in den anderen Betätigungsgriffen (3, 3) vorgesehen sind, zwei Verbindungsstücke (7, 7), die die linken und rechten Griffe (3, 3) getrennt auf der Vorder- und Rückseite verbinden, von vorne gesehen diagonal in einer Überkreuzform angeordnet sind, wodurch die jeweiligen oberen und unteren Enden (7a, 7b) der Verbindungsstücke (7, 7) mit den Drehpunkten (2, 2) und den Drehstiften (6, 6) verbunden sind.

2. Handbetätigtes Werkzeug nach Anspruch 1, das das Paar Schneiden (1, 1) umfasst, um einen Stahldraht zu schneiden, und das so gestaltet ist, dass:
die Nockenkontaktoberflächen (32, 32) so eingestellt sind, dass sie, indem sie der Änderung des Winkels zwischen den Griffen (3, 3) direkt folgen, ungefähr konstante Stellungen beibehalten, ohne sich bezüglich der oberen Abschnitte der Betätigungsgriffe (3, 3) groß in der Aufwärts- und Abwärtsrichtung zu ändern.

3. Handbetätigtes Werkzeug nach Anspruch 1, das das Paar Schneiden (1, 1) umfasst, um ein Kabel zur Stromversorgung zu schneiden, und das so gestaltet ist, dass:
die Nockenkontaktoberflächen (32, 32) so eingestellt sind, dass sie sich, indem sie der Änderung des Winkels zwischen den Griffen (3, 3) von der Stellung aus, an der das Schneiden beginnt (3a), bis zur Arbeitsstellung (3b) folgen, bezüglich der oberen Abschnitte der Betätigungsgriffe (3, 3) in der Abwärtsrichtung bewegen.

4. Handbetätigtes Werkzeug nach Anspruch 1, das das Paar Presser (1', 1') umfasst, um einen Anschluss durch Aufbringung von Druck mit einem Draht zu verbinden, und das so gestaltet ist, dass:
die Nockenkontaktoberflächen (32, 32) so eingestellt sind, dass sie sich, indem sie von der Stellung aus, an der das Verbinden beginnt (3a), bis zur Arbeitsstellung (3b) der Änderung des Winkels zwischen den Griffen (3, 3) folgen, bezüglich der oberen Abschnitte der Betätigungsgriffe (3, 3) allmählich in der Aufwärtsrichtung bewegen.

5. Handbetätigtes Werkzeug, das Folgendes umfasst: ein Paar Schneiden (1, 1) oder Presser, links und rechts; ein Paar Betätigungsgriffe (3, 3), links und rechts, die mit den Klingen (1, 1) oder Pressern über Drehpunkte (2, 2) verbunden sind; und ein Verbindungsstift (4), der die Klingen (1, 1) oder Presser direkt miteinander verbindet, oder eine Verbindungsplatte (5), der die Klingen (1, 1) oder Presser unter Verwendung von Verbindungsstiften (4, 4) miteinander verbindet, und das so gestaltet ist, dass:
obere Abschnitte der Betätigungsgriffe (3, 3) so angeordnet sind, dass sie in der gleichen Ebene gegeneinander stoßen, und ihre gegenüber liegenden Flächen (31, 31) in einer bestimmten Bogenform Nockenkontaktoberflächen (32, 32) ausbilden, die miteinander direkten Kontakt eingehen,
**dadurch gekennzeichnet, dass**
zwischen Achsen (2A, 2A), die in den Betätigungsgriffen (3, 3) jeweils getrennt von den Drehpunkten (2, 2) vorgesehen sind, und Drehstiften (6, 6), die in den anderen Betätigungsgriffen (3, 3) getrennt von den Achsen (2A, 2A) vorgesehen sind, zwei Verbindungsstücke (7, 7), die die linken und rechten Griffe (3, 3) getrennt auf der Vorder- und Rückseite verbinden, von vorne gesehen diagonal in einer Überkreuzform angeordnet sind, wodurch die jeweiligen oberen und unteren Enden (7a, 7b) der Verbindungsstücke (7, 7) mit den Achsen (2A, 2A) und den Drehstiften (6, 6) verbunden sind.

## Revendications

1. Outil à main comprenant : une paire de lames de coupe (1, 1) ou presseurs (1', 1'), gauche et droit (e) ; une paire de poignées de commande (3, 3), gauche et droite, raccordées auxdites lames (1, 1) ou auxdits presseurs (1', 1') via des pivots (2, 2) ; et une broche de raccordement (4) qui raccorde directement lesdites lames (1, 1) ou presseurs (1', 1') entre elles (entre eux) ou une plaque de raccordement (5) qui raccorde lesdites lames (1, 1) ou presseurs (1', 1') entre elles (entre eux) en utilisant des broches de raccordement (4, 4) et étant configuré de sorte que :
des parties supérieures des poignées de commande (3, 3) sont disposées afin de venir en butée dans le même plan, et leurs surfaces opposées (31, 31) forment des surfaces de contact de came (32, 32) dans une certaine forme d'arc qui établissent directement le contact entre elles,
**caractérisé en ce que**
entre lesdits pivots (2, 2) et les broches de pivot (6, 6) prévus dans les autres poignées de commande (3, 3), respectivement, deux accessoires de raccordement (7, 7) qui raccordent les poignées gauche et droite (3, 3) sur les surfaces avant et arrière séparément sont disposés en diagonale selon une forme entrecroisée, comme observé depuis l'avant, raccordant ainsi les extrémités supérieure et inférieure (7a, 7b) respectives des accessoires de raccordement (7, 7) auxdits pivots (2, 2) et auxdites broches de pivot (6, 6).

2. Outil à main selon la revendication 1, comprenant la paire de lames de coupe (1, 1) pour couper un fil d'acier, et étant configuré de sorte que :
lesdites surfaces de contact de came (32, 32) sont placées pour conserver des emplacements approximativement constants sans changer considérablement dans les directions ascendante et descendante par rapport aux parties supérieures des poignées de commande (3, 3) en suivant directement le changement d'angle entre les poignées (3, 3).

3. Outil à main selon la revendication 1, comprenant la paire de lames de coupe (1, 1) pour couper un câble d'alimentation électrique, et étant configuré de sorte que :
lesdites surfaces de contact de came (32, 32) sont placées pour se déplacer progressivement dans la direction descendante par rapport aux parties supérieures des poignées de commande (3, 3) suite au changement d'angle entre les poignées (3, 3) à partir d'une position dans laquelle la coupe commence (3a) jusqu'à la position de travail (3b).

4. Outil à main selon la revendication 1, comprenant la paire de presseurs (1', 1') pour raccorder une borne à un fil en appliquant une pression, et étant configuré de sorte que :
lesdites surfaces de contact de came (32, 32) sont placées pour se déplacer progressivement dans la direction ascendante par rapport aux parties supérieures des poignées de commande (3, 3) suite au changement d'angle entre les poignées (3, 3) à partir d'une position dans laquelle le raccordement commence (3a) jusqu'à la position de travail (3b).

5. Outil à main comprenant : une paire de lames de coupe (1, 1) ou presseurs, gauche et droit(e) ; une paire de poignées de commande (3, 3) gauche et droite raccordées auxdites lames (1, 1) ou auxdits presseurs via des pivots (2, 2) ; et une broche de raccordement (4) qui raccorde directement lesdites lames (1, 1) ou lesdits presseurs entre elles (entre eux) ou une plaque de raccordement (5) qui raccorde lesdites lames (1, 1) ou lesdits presseurs entre elles (entre eux) en utilisant des broches de raccordement (4, 4) et étant configuré de sorte que :
les parties supérieures des poignées de commande (3, 3) sont disposées afin de venir en butée dans le même plan, et leurs surfaces opposées (31, 31) forment des surfaces de contact de came (32, 32) dans une certaine forme d'arc qui établissent le contact entre elles,
**caractérisé en ce que**
entre les axes (2A, 2A) respectivement prévus dans les poignées de commande (3, 3) séparément desdits pivots (2, 2) et des broches de pivot (6, 6) prévus dans les autres poignées de commande (3, 3) séparées des axes (2A, 2A), deux accessoires de raccordement (7, 7) qui raccordent les poignées gauche et droite (3, 3) sur les surfaces avant et arrière séparément sont disposés en diagonale selon une forme entrecroisée, comme observé depuis l'avant, raccordant ainsi les extrémités supérieure et inférieure (7a, 7b) respectives des accessoires de raccordement (7, 7) auxdits axes (2A, 2A) et auxdites broches de pivot (6, 6).
